# EUROPÄISCHE PATENTSCHRIFT

(11) **EP 2 602 013 B1**
(45) Veröffentlichungstag und Bekanntmachung des Hinweises auf die Patenterteilung: **06.08.2014**
(21) Anmeldenummer: 11009619.5
(22) Anmeldetag: 06.12.2011
(51) Int. Cl.: C05B 17/00, C05D 9/00, C05D 9/02, C05F 7/00, B01D 11/02, B09B 3/00, C01B 25/36, C05F 7/04

(54) **Phosphorrückgewinnung aus phosphorhaltigen Produkten, insbesondere aus Klärschlammasche**
Phosphorus recovery of products containing phosphorus, in particular of clearing sludge ash
Récupération de phosphore à partir de produits contenant du phosphore, notamment à partir de cendres de boues d'épuration

(43) Veröffentlichungstag der Anmeldung: 12.06.2013
(73) Patentinhaber: BSH Umweltservice AG, 6210 Sursee (CH)
(72) Erfinder: Schlumberger, Stefan, 4537 Wiedlisbach (CH); Polyak, Klara, 6210 Sursee (CH)
(74) Vertreter: Schaad, Balass, Menzl & Partner AG

(56) Entgegenhaltungen:
- DE-A1- 10 206 347
- DE-A1-102009 020 745
- FR-A- 1 441 626
- DATABASE WPI Week 197714 Thomson Scientific, London, GB; AN 1977-24358Y XP002675367, & JP 52 024188 A (TOYO SODA MFG CO LTD) 23. Februar 1977 (1977-02-23)

## Beschreibung

Die vorliegende Erfindung betrifft die Phosphorrückgewinnung aus Klärschlammasche und ähnlichen phosphorhaltigen Produkten oder Abfällen.

Phosphorerze sind wichtige Rohstoffquellen für die Herstellung einer grossen Vielfalt von Phosphorprodukten, die in Industrie und Landwirtschaft Einsatz finden. Damit stellen sie ein sehr wichtiges Wirtschaftsgut dar. Die nachgewiesenen Weltvorräte nehmen stark ab.

Phosphat ist als Düngemittel nicht durch andere Stoffe substituierbar. Dies ist problematisch, da eine intensive Landwirtschaft ohne Phosphatdüngung nicht möglich ist.

Es sind Verfahren bekannt, mit denen Phosphor aus Klärschlamm und tierischen Nebenprodukten, die in grossen Mengen Phosphor enthalten, gewonnen wird. Klärschlamm wurde ausserdem direkt auf Landwirtschaftsflächen aufgebracht, dies ist jedoch mittlerweile sehr umstritten. Die Gehalte an Schwermetallen und der Nachweis von persistenten organischen Stoffen, deren ökologisches Potential teilweise unbekannt ist, haben dazu geführt, dass das Ausbringen von Klärschlamm auf Landwirtschaftsflächen mittlerweile verboten ist.

In Abwasser gelöste Phosphate werden mit Hilfe geeigneter Fällungsmittel in ungelöste Phosphate umgewandelt und als Feststoff zusammen mit anderen Feststoffen in Form von Klärschlamm aus dem Abwasser entfernt (chemische P-Fällung). Mögliche Fällungsmittel sind Eisenchloride, Eisenchloridsulfate, Eisensulfate, Aluminiumsulfate, Natriumaluminate und Kalkmilch. Alternativ werden die gelösten Phosphate mit Hilfe von Mikroorganismen, die Phosphate in ihren Zellen einlagern, aus dem Abwasser entfernt (biologische P-Fällung). Auch die Kombination der chemischen und biologischen Fällung ist bekannt. Durch den hohen Phosphatanteil ist es sinnvoll, den Klärschlamm aufzuarbeiten. Bei der thermischen Mono-Verbrennung wird der organische Anteil des Klärschlammes vernichtet. Zurück bleibt eine Asche mit überwiegend anorganischem Stoffbestand. Alternativ kann über das sogenannte HTC-Verfahren (hydrothermale Carbonisierung) phosphorhaltige Kohle als Brennstoff erhalten werden.

Im Stand der Technik sind ausserdem verschiedene Ansätze zur Nutzung oder Gewinnung von Phosphor aus der Asche von Mono-Klärschlammverbrennungen bekannt. Dies sind beispielsweise
- direkte Aufarbeitung der Asche in der Düngemittelindustrie,
- Auswaschen der Phosphate mit heissem Wasser und anschliessender Fällung oder Kristallisation,
- Eluierung der Phosphate aus der Asche mit Schwefelsäure unter Einsatz von Ionenaustauschern,
- Kepro-Prozess mit Saure und Hitze,
- Seaborne Verfahren mit NRS-Reaktoren (Nitrogen Recycling System),
- Phostrip-Prozess,
- Ashdec-Verfahren.

Sämtliche dieser Verfahren sind in der DE 10 2009 020 745 beschrieben. Ausserdem wird in der DE 10 2009 020 745 ein Verfahren zur Gewinnung von Phosphat beschrieben, bei dem eine Suspension des Klärschlammproduktes in Wasser, Wasser/Alkohol-Gemisch oder wässriger Lösung herstellt wird, und anschliessend gasförmiges Kohlendioxid oder überkritisches Kohlendioxid als Extraktionsmittel in die Suspension des Klärschlammproduktes einleitet wird. Die ungelösten Feststoffe werden von dem flüssigen Suspendiermittel abgetrennt. Kohlendioxid wird aus dem Suspendiermittel entfernt und schliesslich wird das in dem Suspendiermittel gelöste Phosphat ausgefällt und abgetrennt.

CH 697 083 offenbart ein Verfahren und eine Anlage zur Rückgewinnung von Phosphor aus phosphorhaltigen Verbrennungsaschen. Dazu werden die in der Verbrennungsasche enthaltenen Phosphate durch einen Säureaufschluss in Lösung gebracht. Die Lösung wird gereinigt, und insbesondere Eisen entfernt. Aus dem von Eisen und anderen Schwermetallen gereinigten Raffinat werden Calciumphosphate gefällt. Die bei dem Säureaufschluss erhaltene Lösung wird durch eine Flüssig-Flüssig-Extraktion gereinigt und hierbei Eisen entfernt. Vorzugsweise wird mit einem organischen Extraktionsmittel gereinigt. Problematisch an dem Verfahren ist die aufwändige Entfernung des Eisens aus der Lösung.

DE 102 06 347 offenbart ein Verfahren zur Gewinnung von Phosphorverbindungen aus Verbrennungsrückständen. Dazu wird der Verbrennungsasche zum Lösen der in der verbrennungsasche befindlichen Phosphatverbindungen verdünnte Mineralsäuren zugeführt, anschliessend wird die Trennung der phosphathaltigen Lösung von unlöslichen Begleitkomponenten und von durch Fällung abgeschiedenen, nicht phosphathaltigen Bestandteilen durchgeführt, gefolgt von der Aufbereitung der entstandenen Phosphatlösung.

Die bisher im Stand der Technik beschriebenen Verfahren weisen verschiedene Nachteile auf. Zum Teil sind sie sehr aufwändig und mit einem grossen Energieverbrauch verbunden, da bei erhöhten Temperaturen gearbeitet wird. Andere Verfahren ermöglichen nur die Verwendung von eisenfreier Klärschlammasche.

Aufgabe der vorliegenden Erfindung ist es, ein wirtschaftliches, ökologisches und einfaches Verfahren zur Rückgewinnung von Phosphorverbindungen aus Klärschlammasche, phosphorhaltigen Produkten oder phosphorhaltigen Abfällen bereitzustellen.

Die Aufgabe wird durch das Verfahren gemäss Anspruch 1 gelöst. Weitere bevorzugte Ausführungsformen sind Gegenstand der abhängigen Ansprüche.

Durch das unten beschriebene Verfahren ist es möglich, verschiedenste phosphorhaltige Produkte, insbesondere Klärschlammasche, phosphorhaltige Kohle und phosphorhaltige Abfälle, effizient und kostengünstig aufzubereiten, wobei ein Grossteil des Phosphors in Form von basischen Aluminiumphosphaten zurückgewonnen wird. Die Aluminiumphosphate sind im Wesentlichen frei von Schwermetallen oder erfüllen zumindest die gesetzlichen Grenzwerte und können daher wieder verwendet werden. Die für das erfindungsgemässe Verfahren verwendeten Apparaturen sind kostengünstige Standardapparaturen. Das gesamte Verfahren findet bei Umgebungstemperatur statt, daher sind keine Heizquellen notwendig, bzw. die Reaktionswärme wird zur Erwärmung genutzt.

Überdies ist es möglich, sämtliche Arten von Klärschlammaschen mit dem erfindungsgemässen Verfahren zu behandeln. Im Gegensatz zu den im Stand der Technik bekannten Verfahren, ist die Anwesenheit von Eisen in der Klärschlammasche kein Problem. Das Eisen muss auch nicht durch einen aufwändigen, separaten Prozess mittels Ionenaustauscher oder Ähnlichem abgetrennt werden, sondern bleibt durch geeignete Bedingungen in Lösung, wenn das Produkt abgetrennt wird. Auch Klärschlammasche aus Klärschlamm, der mittels chemischer und biologischer Fällung hergestellt wurde, insbesondere eisenhaltige Klärschlammasche kann mit dem erfindungsgemässen Verfahren problemlos behandelt werden.

Das erfindungsgemässe Verfahren zur Rückgewinnung von Phosphorverbindungen aus Klärschlammaschen umfasst wenigstens folgende Schritte:
In einem ersten Schritt (a) werden die in der Klärschlammasche enthaltenen phosphorhaltigen Verbindungen, insbesondere Phosphate, durch einen Säureaufschluss mit einer verdünnten Mineralsäure in Lösung gebracht. Der Säureaufschluss wird in einem säurebeständigen Aufschlussbehälter durchgeführt. Beim Säureaufschluss geht ein Grossteil, d.h. mehr als 70 % der Phosphorverbindungen in Lösung. Desweiteren gehen auch einige Schwermetallkationen, sowie säurelösliche Salze in Lösung. Anschliessend wird durch eine Filtration die Klärschlammaschen-Säure-Suspension in einen phosphorarmen Filterkuchen und ein phosphorreiches Filtrat getrennt. Das erhaltene, phosphorreiche Filtrat hat einen pH-Wert von 0 bis 1.0, vorzugsweise 0 bis 0.5.

Schwermetallkationen, die aus der Klärschlammasche herausgelöst worden sind, müssen abgetrennt werden, da sie sonst in das im letzten Verfahrensschritt ausgefällte Phosphorprodukt eingebunden werden. Dazu gibt es zwei Möglichkeiten: Entweder wird während oder unmittelbar beim Säureaufschluss in den Aufschlussbehälter ein Opfermetall zugegeben, oder das Opfermetall wird nach dem Abfiltrieren des Filterkuchens in einen separaten Behälter gegeben, der das Filtrat enthält.

Das Opfermetall wird ausgewählz aus der Gruppe von Aluminium, Eisen und Zink oder Mischungen davon. Dabei findet eine Reduktion der gelöst vorliegenden edleren Metalle auf der Oberfläche des unedleren Opfermetalls statt, das dabei oxidiert wird. Beispielsweise finden folgende Reaktionen statt:

2 Al + 3 Pb²⁺ -> 2 Al³⁺ + 3 Pb

2 Al + 3 Cu²⁻ -> 2 Al³⁺ + 3 Cu

2 Al + 3 Cd²⁻ -> 2 Al³⁺ + 3 Cd

Fe + Pb²⁺ -> Fe²⁺ + Pb

Fe + Cu²⁺ -> Fe²⁺ + Cu

Fe + Cd²⁺ -> Fe²⁺ + Cd

Zn + Pb²⁺ -> Zn²⁺ + Pb

Zn + Cu²⁺ -> Zn²⁺ + Cu

Zn + Cd²⁺ -> Zn²⁺ + Cd

Durch die hier vorliegenden reduktiven Bedingungen, die unter anderem durch die Bildung von naszierendem Wasserstoff entstehen (2 Al + 6 H⁺ -> 3 Al³⁺ und 3 H₂), wird entweder in der Suspension bereits vorhandenes oder neu gebildetes Eisen (III) zu Eisen (II) reduziert, was für die spätere Unterdrückung der Ausfällung bei pH-Werten < 3.0 entscheidend ist.

Zusätzlich können die reduktiven Bedingungen durch die Zugabe eines geeigneten Reduktionsmittels wie beispielsweise Na₂SO₃, Na₂S₂O₄, Na₂S₂O₃ verstärkt werden. Die optionale Zugabe eines Reduktionsmittels kann wahlweise bei der Opfermetallzugabe oder später bei der Aluminiumsalzzugabe erfolgen. Das Opfermetall wird im Allgemeinen im stöchiometrischen Überschuss der 0.5 bis 10-fachen Stoffmenge der edleren Metalle zugegeben, idealerweise liegt der Überschussfaktor zwischen 1 bis 5. Das eingesetzte Opfermetall weist typischerweise eine Körnung auf, die kleiner als 2 mm ist, besonders bevorzugt ist eine Körnung zwischen 0.001 und 0.8 mm.

Der Säureaufschluss dauert typischerweise 10 bis 30 Minuten und die Reaktion mit dem Opfermetall 20 bis 60 Minuten.

Das metallisch abgeschiedene Schwermetallgemisch aus Cadmium, Kupfer und Blei wird durch Filtration abgetrennt. Die Filtration findet entweder direkt im ersten Schritt statt, wenn das Opfermetall während oder unmittelbar nach dem Säureaufschluss zugegeben wird, oder aber falls das Opfermetall in einem separaten Verfahrensschritt zugegeben wird, durch eine zusätzliche Filtration. Der stark saure pH-Bereich erlaubt eine sehr effiziente und kostengünstige Abtrennung der Schwermetalle aus der Klärschlammasche.

Anschliessend werden dem Filtrat ein Aluminiumsalz oder eine Mischung verschiedener Aluminiumsalze oder wässrige Lösungen der Al-Salze zugegeben, welche im Filtrat löslich sein sollten. Die Menge des eingesetzten Aluminiumsalzes sollte so gewählt werden, dass ein stöchiometrischer Überschuss bezogen auf die Phosphorkonzentration vorliegt. Die Phosphorkonzentration kann durch Standardmethoden ermittelt werden, wie beispielsweise durch Ionenchromatographie und Photometrie. Durch die Zugabe einer Base wird der pH-Wert auf 2.1 bis 3.0 angehoben und die gelöst vorliegenden Phosphorverbindungen werden in Form von basischen Aluminiumphosphaten im Wesentlichen vollständig ausgefällt und mittels Filtration abgetrennt. Durch diesen tiefen Fällungs-pH-Wert von maximal 3.0 bleiben Schwermetallkationen mit höherem Fällungs-pH-Wert wie Kobalt, Chrom, Eisen, Mangan, Nickel und Zink etc. in Lösung und können so elegant und einfach von dem Produkt abgetrennt werden.

In einer weiteren bevorzugten Ausführungsform wird vor der eigentlichen Produktisolierung, d.h. vor der Zugabe des Aluminiumsalzes und des Opfermetalls, das Filtrat, das einen pH Wert von 0 bis 1.0, vorzugsweise von 0 bis 0.5, aufweist, erneut mit Klärschlammasche versetzt. Durch die Klärschlammasche, die alkalisch wirkt, wird der pH des Filtrats auf einen pH-Wert von 1.0 bis 2.0 angehoben. Neben der Teilneutralisation der Säurephase wird die Klärschlammasche anteilig vorextrahiert, d.h. Phosphate gehen bereits zu einem Teil in Lösung. Zur vollständigen Phosphorextraktion wird die nach einer weiteren Filtration abgetrennte vorextrahierte Klärschlammasche wieder in den Extraktionsprozess der neu zugegebenen KSA mit frischer Mineralsäure zurück geführt. Ein zu starkes Ansteigen des pH muss verhindert werden, um sicher zu stellen, dass keine unerwünschten Ausfällungen stattfinden. Besonders bevorzugt wird der pH in einen Bereich von pH 1.3 bis 1.8 angehoben. Der pH kann über Standardmethoden kontrolliert werden.

Das Opfermetall kann wiederum während oder unmittelbar nach dem Säureaufschluss in den Aufschlussbehälter gegeben werden, oder alternativ, in ein separates Behältnis nach Abtrennung des Filterkuchens. Der Prozess kann sowohl kontinuierlich als auch diskontinuierlich mit den jeweils geeigneten verfahrenstechnischen Komponenten betrieben werden.

Diese Ausführungsform mit der erneuten Zugabe von Klärschlammasche hat den Vorteil, dass die Menge von Neutralisationschemikalien (Base), die für die Fällung des Phosphorproduktes notwendig ist, reduziert werden kann. Des Weiteren kann somit der Säureverbrauch des Gesamtprozess deutlich reduziert werden.

In einer bevorzugten Ausführungsform ist das Opfermetall Aluminium. Aluminium hat den Vorteil, dass es bereits das Metall ist, das anschliessend für die Produkteisolierung verwendet wird.

In einer weiteren bevorzugten Ausführungsform ist das Opfermetall Eisen. Eisen hat den Vorteil, dass es sehr billig ist und daher aus wirtschaftlichen Gründen bevorzugt wird. Es ist aber auch eine Kombination aus Aluminium und Eisen denkbar.

Der Säureaufschluss wird mit einer verdünnten Mineralsäure durchgeführt. Diese ist vorzugsweise ausgewählt aus der Gruppe von Salzsäure, Schwefelsäure, Phosphorsäure und Mischungen davon. Die Konzentration der verdünnten Mineralsäuren ist dabei vorzugsweise im Bereich von 0.1 bis 2.5 M, besonders bevorzugt 0.5 bis 1.5 M.

Für die Produktisolierung wird nach der Zugabe des Aluminiumsalzes eine Base zugegeben, um den pH auf 2.1 bis 3.0 anzuheben. Die Base ist dabei vorzugsweise ausgewählt aus der Gruppe von Natronlauge, Ammoniak, Kalkmilch und Soda. Besonders bevorzugt ist dabei der Einsatz von Natronlauge oder Kalkmilch und Mischungen davon, da dies zu einem sehr hohen Phosphorgehalt des Produktes führt. Besonders bevorzugt wird der pH in einen Bereich von 2.5 bis 3.0 angehoben, weil dadurch eine fast vollständige Fällung des basischen Aluminiumphosphates erfolgt und noch keine Fällung anderer, nicht erwünschter Verbindungen stattfindet.

In einer weiteren Ausführungsform ist die Aluminiumverbindung ausgewählt aus der Gruppe von Aluminiumchlorid, Aluminiumsulfat, Kaliumaluminiumsulfat, Natriumaluminat, Polyaluminium(hydroxid)chlorid, Aluminium-Eisen(III)chlorid, Polyaluminium-(Hydroxid)-chlorid-Sulfat, Polyaluminium-Eisen(III)chlorid oder Mischungen und wässrige Lösungen davon. Besonders bevorzugt sind Aluminiumsulfat- und Aluminiumchloridlösungen oder Abfallstoffe fest oder flüssig, die lösliches Al³⁺ enthalten.

Das gefällte Phosphorprodukt, d.h. das Aluminiumphosphat, kann nun entweder in die Düngemittelherstellung oder der thermischen Phosphorproduktion zugeführt werden. Der Einsatz in der thermischen Phosphorproduktion (Thermphos-Verfahren) ist auch mit Produkten, die aus eisenhaltiger Klärschlammasche hergestellt wurden, möglich. Der Grund ist, dass das durch das erfindungsgemässe Verfahren erhaltene Phosphorprodukt, dank der optimalen pH-Wahl während des Rückgewinnungsprozesses den Einbau von Eisen in das Produkt im Wesentlichen verhindert.

Das oben beschriebene Verfahren kann analog anstelle von Klärschlammasche mit einem phosphorhaltigen Produkt oder einem phosphorhaltigen Abfall durchgeführt werden. Ein mögliches phosphorhaltiges Produkt ist beispielsweise phosphorhaltige Kohle.

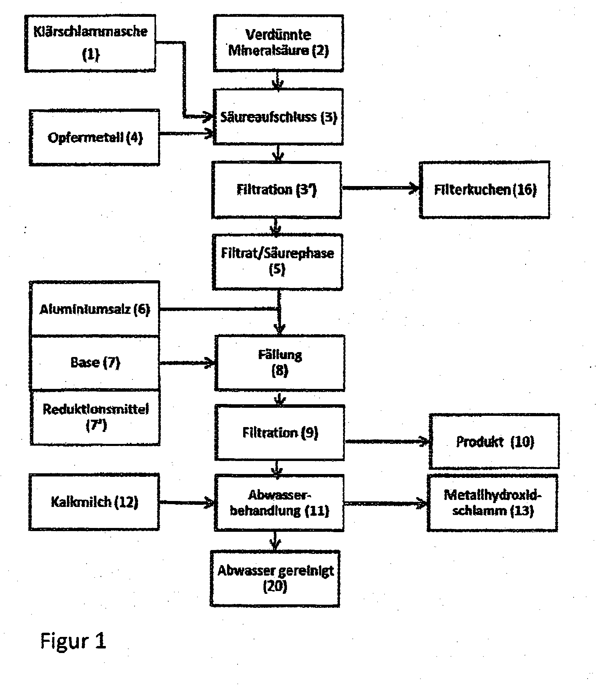

Die Erfindung wird in den in den Figuren 1 bis 4 gezeigten Flussdiagrammen verdeutlicht.

In Figur 1 wird die Klärschlammasche (1) mit verdünnter Mineralsäure (2) in einem Aufschlussbehälter (3), in dem der Säureaufschluss durchgeführt wird, unter Rühren versetzt. Anschliessend wird das Opfermetall (4) zugegeben. Es ist auch möglich, das Opfermetall bereits während des Säureaufschlusses zuzugeben. Nachdem im Wesentlichen alle Schwermetallkationen (Blei, Cadmium und Kupfer), die mit dem Opfermetall reagieren können, reduziert worden sind, wird die Suspension in der nachfolgenden Filtrationseinheit (3'), in der die Fest-Flüssig-Treffung erfolgt, filtriert und die gebildeten Schwermetalle Blei, Cadmium und Kupfer werden zusammen mit dem Filterkuchen (16) vom Filtrat (5) abgetrennt. Das Filtrat (5) weist einen pH-Wert von ca. 0 bis 1.0, vorzugsweise 0 bis 0.5 auf. In einem nächsten Schritt wird ein Aluminiumsalz (6), eine Mischung von verschiedenen Aluminiumsalzen oder wässrige Lösungen mit Al-Salzen zugegeben und anschliessend durch Zugabe eines optionalen Reduktionsmittels (7') und einer Base (7) der pH des Filtrates auf 2.1 bis 3.0 angehoben, wobei das gewünschte Aluminiumphosphat in einem Fällungsbehälter (8) gefällt wird. Das Produkt (10) wird durch Filtration (9) abgetrennt. Das Filtrat, das noch weitere Schwermetalle mit höherem Fällungs-pH-Wert enthält, wird in die Abwasserbehandlung (11) abgeführt und dort nach einem Standardverfahren behandelt (beispielsweise Zusetzen von Kalkmilch (12) unter Bildung von Metallhydroxidschlamm (13)).

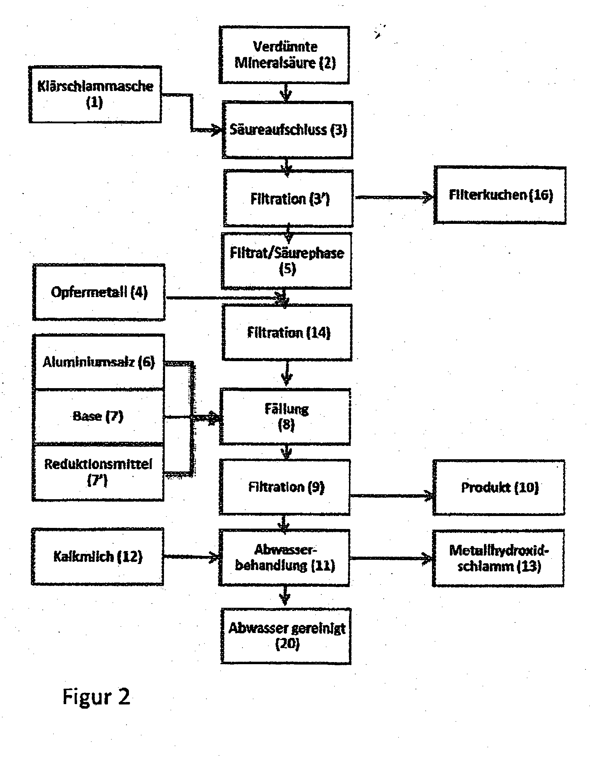

In Figur 2 wird die Klärschlammasche (1) mit verdünnter Mineralsäure (2) in einem Aufschlussbehälter (3), I in dem der Säureaufschluss durchgeführt wird, unter Rühren versetzt. In der nachfolgenden Filtrationseinheit (3') erfolgt die Fest-/Flüssig-Trennung, wobei der Filterkuchen (16) abgetrennt wird. Das Filtrat (5) weist einen pH-Wert von ca. 0 bis 1.0, vorzugsweise 0 bis 0.5 auf. Das Opfermetall (4) wird in dieser Ausführungsform in einem separaten Verfahrensschritt nach der Abtrennung des Filterkuchens zugegeben. Nachdem im Wesentlichen alle Schwermetallkationen (Blei, Cadmium und Kupfer), die mit dem Opfermetall reagieren können, reduziert worden sind, wird die Suspension abfiltriert (14) und die metallischen Schwermetalle vom Filtrat getrennt. In einem nächsten Schritt wird ein Aluminiumsalz (6), eine Mischung von verschiedenen Aluminiumsalzen oder wässrige Lösungen mit Al-Salzen zugegeben, und anschliessend durch Zugabe eines optionalen Reduktionsmittels (7') und einer Base (7) der pH des Filtrates auf 2.1 bis 3.0 angehoben, wobei das gewünschte Aluminiumphosphat in einem Fällungsbehälter (8) gefällt wird. Das Produkt (10) wird durch Filtration (9) abgetrennt. Das Filtrat, das noch weitere Schwermetalle mit höherem Fällungs-pH-Wert enthält, wird in die Abwasserbehandlung (11) abgeführt und dort nach einem Standardverfahren behandelt (beispielsweise Zusetzen von Kalkmilch (12) unter Bildung von Metallhydroxidschlamm (13)).

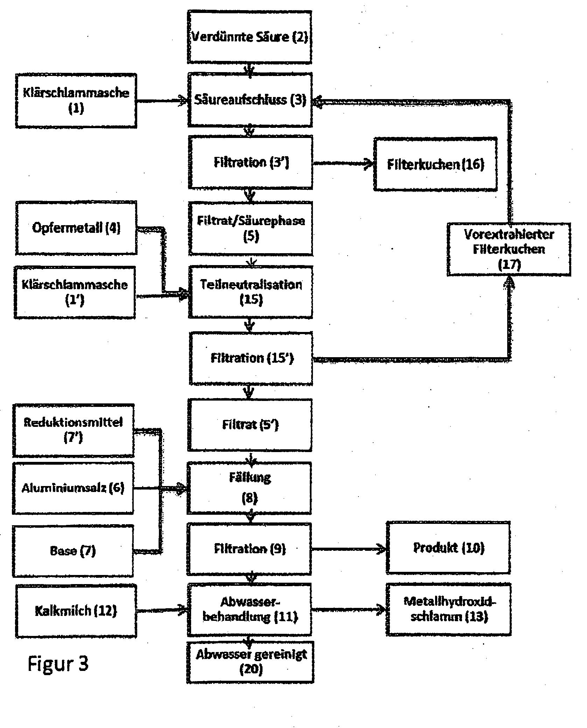

In Figur 3 wird die Klärschlammasche (1) mit verdünnter Mineralsäure (2) in einem Aufschlussbehälter (3), in dem der Säureaufschluss durchgeführt wird, unter Rühren versetzt. In der nachfolgenden Filtrationseinheit (3') erfolgt die Fest-/Flüssig-Trennung. Das Filtrat (5) weist einen pH-Wert von 0 bis 1.0, vorzugsweise 0 bis 0.5 auf. Im Unterschied zu der in Figur 1 dargestellten Ausführungsform wird dem Filtrat (5) nun erneut Klärschlammasche (KSA) (1'), die alkalisch reagiert, zugegeben, wobei der pH auf einen pH-Wert von maximal 2.0, bevorzugt 1.3 bis 1.8 angehoben wird (Teilneutralisation 15)). Anschliessend wird das Opfermetall (4) zugegeben. Es ist auch möglich, das Opfermetall bereits anteilig während des Säureaufschlusses zuzugeben. Nachdem im Wesentlichen alle Schwermetallkationen (Blei, Cadmium und Kupfer), die mit dem Opfermetall reagieren können, reduziert worden sind, wird die Suspension abfiltriert (15') und die gebildeten Schwermetalle Blei, Cadmium und Kupfer werden zusammen mit dem Filterkuchen (17) vom Filtrat (5') abgetrennt. Zur Ausfällung des Produktes wird zu dem Blei, Kupfer und Cadmium befreiten Filtrat (5) ein Aluminiumsalz (6) oder eine Mischung von verschiedenen Aluminiumsalzen und Lösungen zugegeben, und anschliessend wird durch Zugabe einer Base (7) und optional eines Reduktionsmittels (7') der pH des Filtrates auf 2.1 bis 3.0 angehoben, wobei das gewünschte Aluminiumphosphat in einem Fällungsbehälter (8) gefällt wird. Das Produkt (10) wird durch Filtration (9) abgetrennt. Das Filtrat, das noch weitere Schwermetalle mit höherem Fällungs-pH-Wert enthält wird in die Abwasserbehandlung (11) abgeführt und dort nach einem Standardverfahren behandelt (beispielsweise Zusetzen von Kalkmilch (12) zur Bildung von Metallhydroxidschlamm (13)).

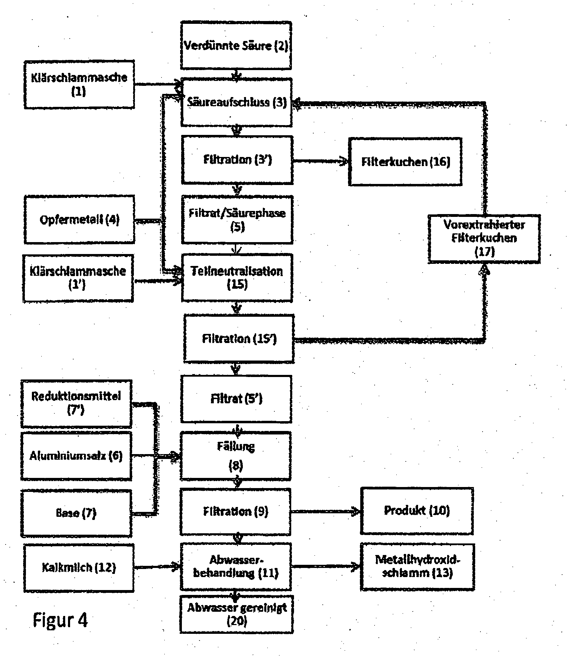

In Figur 4 wird die Klärschlammasche (1) mit verdünnter Mineralsäure (2) in einem Aufschlussbehälter (3), in dem der Säureaufschluss durchgeführt wird, unter Rühren versetzt. Anschliessend wird das Opfermetall (4) zugegeben. Nachdem im Wesentlichen alle Schwermetallkationen (Blei, Cadmium und Kupfer), die mit dem Opfermetall reagieren können, reduziert worden sind, wird die Suspension abfiltriert (3') und die abgeschiedenen Metalle Blei, Cadmium und Kupfer werden zusammen mit dem Filterkuchen (16) vom Filtrat (5) separiert. Das Filtrat (5) weist einen pH-Wert von ca. 0 bis 1.0, vorzugsweise 0 bis 0.5 auf. Im Unterschied zu der in Figur 2 dargestellten Ausführungsform, wird der Säurephase (5) nun neue Klärschlammasche (1'), die alkalisch reagiert, zugegeben, wobei der pH-Wert von maximal 2.0, bevorzugt 1.3 bis 1.8 angehoben wird (Teilneutralisation 15). Während oder unmittelbar nach der Teilneutralisation wird wieder das Opfermetall (4) in den Reaktionsbehälter zugegeben und nach der Reaktion werden die gebildeten Schwermetalle Blei, Cadmium und Kupfer zusammen mit dem vorextrahierten Filterkuchen (17) über die zusätzliche Filtrationsstufe (13') ausgetragen. Der vorextrahierte Filterkuchen (17) wird zur vollständigen Phosphatextraktion in die Säureaufschlussstufe (3) zurück geführt und dort mit neuer Klärschlammasche (1) und verdünnter Mineralsäure (2) vollständig extrahiert und als Filterkuchen (16) über die Filtration (3') ausgetragen. Dem phosphorhaltigen Filtrat (5'), mit einem pH-Wert von maximal 2.0, bevorzugt 1.3 bis 1.8, wird ein Aluminiumsalz (6) oder eine Mischung von verschiedenen Aluminiumsalzen oder deren wässrigen Lösungen zugegeben, und anschliessend durch Zugabe einer Base (7) und optional eines Reduktionsmittels (7') der pH des Filtrates auf 2.1 bis 3.0 angehoben, wobei das gewünschte basische Aluminiumphosphat in einem Fällungsbehälter (8) gefällt wird. Das Produkt (10) wird durch Filtration (9) abgetrennt. Das Filtrat, das noch weitere Schwermetallkationen mit höherem Fällungs-pH-Wert enthält wird in die Abwasserbehandlung (11) abgeführt und dort nach einem Standardverfahren behandelt (beispielsweise Zusetzen von Kalkmilch (12) unter Bildung von Metallhydroxidschlamm (13)).

### Beispiel 1.

Die im Beispiel eingesetzte Klärschlammasche stammt aus einer industriellen Klärschlammverbrennungsanlage. Der verwendete Klärschlamm wurde chemisch/biologisch gewonnen. Es wurde das Verfahren gemäss Flussdiagramm 1 durchgeführt:
500 g Schwefelsäure (9% H₂SO₄, (2)) werden mit 100 g getrocknete Klärschlammasche (1) versetzt und bei Raumtemperatur für 10 Minuten gerührt. Nach 10 Minuten werden 10 g Aluminiumpulver (4) zugegeben. Die Suspension wird für weitere 30 Minuten gerührt und anschliessend mit einer Vakuumfilternutsche filtriert (3'). Das Filtrat (5) wird mit 25 g Aluminium(III)chlorid versetzt und unter Rühren mit Natronlauge 50% auf pH 2.8 neutralisiert. Anschliessend wird das ausgefallene basische Aluminiumphosphat mit einer Vakuumfilternutsche abfiltriert. Es werden 173 g feuchtes basisches Aluminiumphosphat gewonnen (TS-Gehalt 33%). Der Trockensubstanzanteil beträgt 57 g basisches Aluminiumphosphat.

Die chemische Zusammensetzung ausgewählter Elemente des Phsphorproduktes ist in Tabelle 1 zusammengefasst.

In Tabelle 1 ist die Zusammensetzung der Klärschlammasche und des Phosphorfällungsproduktes zusammengestellt:

| | **Klärschlammasche** | **Phosphorprodukt** |
|---|---|---|
| **Element** | **[mg/kg Trockensubstanz]** | **[mg/kg Trockensubstanz]** |
| Aluminium | 33'403 | 65'000 |
| Antimon | 22 | 10 |
| Arsen | 13 | 6 |
| Barium | 1'480 | 80 |
| Blei | 131 | 40 |
| Brom | 50 | 13 |
| Cadmium | < 6 | < 1 |
| Calcium | 143'033 | 4`000 |
| Chrom | 80 | 40 |
| Eisen | 165'900 | 9'000 |
| Kalium | 5'698 | 400 |
| Kobalt | 153 | < 50 |
| Kupfer | 847 | 25 |
| Magnesium | 18'233 | 2'000 |
| Mangan | 1'523 | 300 |
| Natrium | 4'767 | 107'000 |
| Nickel | 53 | < 10 |
| Phosphor | 83'073 | 135'000 |
| Schwefel | 12'760 | 123'000 |
| Silizium | 98'973 | 3'750 |
| Titan | 6'183 | 700 |
| Zink | 2'447 | 500 |

## Patentansprüche

1. Verfahren zur Rückgewinnung von Phosphorverbindungen aus Klärschlammaschen, phosphorhaltigen Produkten oder phosphorhaltigen Abfällen, in dem
a) die in der Klärschlammasche, den phosphorhaltigen Produkten oder den phosphorhaltigen Abfällen enthaltenen phosphorhaltigen Verbindungen in einem Aufschlussbehälter durch einen Säureaufschluss mit einer verdünnten Mineralsäure in Lösung gebracht werden, und durch Filtration ein Filterkuchen vom Filtrat abgetrennt wird, wobei das Filtrat einen pH-Wert von 0 bis 1.0 aufweist,
b) wobei
i. während oder unmittelbar nach dem Säureaufschluss in den Aufschlussbehälter zu der Klärschlammasche, den phosphorhaltigen Produkten oder den phosphorhaltigen Abfällen und der verdünnten Mineralsäure oder
ii. in einen separaten Behälter zu dem Filtrat nach Abtrennung des Filterkuchens
ein Opfermetall ausgewählt aus der Gruppe von Aluminium, Eisen und Zink oder Mischungen davon zugegeben wird, um Schwermetallkationen zu reduzieren, wobei das so entstandene metallische Schwermetall mittels Filtration zusammen mit dem Filterkuchen oder separat abgetrennt wird,
c) Zugabe eines Aluminiumsalzes, Mischungen verschiedener Aluminiumsalze oder einer wässrigen Lösungen der Al-Salze im stöchiometrischen Überschuss bezogen auf die Phosphorkonzentration,
d) Anhebung des pH-Werts mit einer Base in einen Bereich von pH 2.1 bis 3.0 zur Fällung der Phosphorverbindungen und Abtrennung dieser.

2. Verfahren gemäss Anspruch 1, **dadurch gekennzeichnet, dass** vor der Aluminiumsalz Zugabe in Schritt c) erneut Klärschlammesche zugegeben wird, wobei der pH durch die Klärschlammasche wieder auf einen pH Wert von 1.0 bis 2.0 angehoben wird und ein vorextrahierter Filterkuchen mittels Filtration vom Filtrat abgetrennt wird.

3. Verfahren gemäss einem der vorangehenden Ansprüche, **dadurch gekennzeichnet, dass** das Opfermetall während oder unmittelbar nach dem Säureaufschluss in den Aufschlussbehälter gegeben wird.

4. Verfahren gemäss einem der Ansprüche 1 und 2, **dadurch gekennzeichnet, dass** das Opfermetall in einen separaten Behälter gegeben wird.

5. Verfahren gemäss einem der vorangehenden Ansprüche, **dadurch gekennzeichnet, dass** in Schritt b) oder c) zusätzlich ein Reduktionsmittel zugegeben wird.

6. Verfahren gemäss einem der vorangehenden Ansprüche, **dadurch gekennzeichnet, dass** das Opfermetall Aluminium ist.

7. Verfahren gemäss einem der vorangehenden Ansprüche, **dadurch gekennzeichnet, dass** das Opfermetall Eisen ist.

8. Verfahren gemäss einem der vorangehenden Ansprüche, **dadurch gekennzeichnet, dass** die verdünnte Mineralsäure ausgewählt ist aus der Gruppe von Salzsäure, Schwefelsäure, Phosphorsäure oder Mischungen davon.

9. Verfahren gemäss einem der vorangehenden Ansprüche, **dadurch gekennzeichnet, dass** die Base in Schritt d) ausgewählt ist aus der Gruppe von Natronlauge, Ammoniak, Kalkmilch und Soda.

10. Verfahren gemäss einem der vorangehenden Ansprüche 2 bis 8, **dadurch gekennzeichnet, dass** bei der erneuten Zugabe der Klärschlammasche der pH in einen Bereich von pH 1.3 bis 1.8 angehoben wird.

11. Verfahren nach einem der vorangehenden Ansprüche, **dadurch gekennzeichnet, dass** der pH-Bereich in Schritt d) zur Fällung der Phosphorverbindungen in den Bereich von pH 2.5 bis 3.0 angehoben wird.

12. Verfahren gemäss einem der vorangehenden Ansprüche, **dadurch gekennzeichnet, dass** das Aluminiumsalz ausgewählt ist aus der Gruppe von Aluminiumchlorid, Aluminiumsulfat und Kaliumaluminiumsulfat.

13. Verfahren gemäss einem der vorangehenden Ansprüche, **dadurch gekennzeichnet, dass** die Klärschlammasche eisenhaltig ist.

## Claims

1. Process for recovery of phosphorus compounds from sewage sludge ashes, phosphorus-containing products or phosphorus-containing wastes, comprising the steps of
a) dissolving the phosphorus-containing compounds present in the sewage sludge ash, the phosphorus-containing products or the phosphorus-containing wastes in a digestion vessel by acid digestion with a dilute mineral acid and separating off a filter cake from the filtrate by filtration, wherein the filtrate has a pH of from 0 to 1.0,
b) adding a sacrificial metal selected from the group consisting of aluminium, iron and zinc and mixtures thereof
(i) to the sewage sludge ash, the phosphorus-containing products or the phosphorus-containing wastes in the digestion vessel during or immediately after the acid digestion or
(ii) to the filtrate in a separate vessel after the filter cake has been separated off
to reduce heavy metal cations, wherein the metallic heavy metal thus generated is separated off by filtration together with the filter cake or separately,
c) adding an aluminium salt, mixtures of different aluminium salts or an aqueous solutions of the A1 salts in a stoichiometric excess based on the phosphorus concentration,
d) raising the pH with a base to within the range from 2.1 to 3.0 to precipitate and separate off the phosphorus compounds.

2. Process according to Claim 1, **characterized in that** prior to adding aluminium salt in step c) further sewage sludge ash is added, wherein the pH is again raised to within the range from 1.0 to 2.0 by the sewage sludge ash and a pre-extracted filter cake is separated off from the filtrate by filtration.

3. Process according to either of the preceding claims, **characterized in that** the sacrificial metal is added to the digestion vessel during or immediately after the acid digestion.

4. Process according to either of Claims 1 and 2, **characterized in that** the sacrificial metal is added to a separate vessel.

5. Process according to any one of the preceding claims, **characterized in that** step b) or c) further comprises the addition of a reductant.

6. Process according to any one of the preceding claims, **characterized in that** the sacrificial metal is aluminium.

7. Process according to any one of the preceding claims, **characterized in that** the sacrificial metal is iron.

8. Process according to any one of the preceding claims, **characterized in that** the dilute mineral acid is selected from the group consisting of hydrochloric acid, sulphuric acid, phosphoric acid and mixtures thereof.

9. Process according to any one of the preceding claims, **characterized in that** the base in step d) is selected from the group consisting of aqueous sodium hydroxide solution, ammonia, milk of lime and sodium carbonate.

10. Process according to any one of the preceding Claims 2 to 8, **characterized in that** when the further sewage sludge ash is added, the pH is raised to within the range from 1.3 to 1.8.

11. Process according to any one of the preceding claims, **characterized in that** in step d) the pH is raised to within the range from 2.5 to 3.0 to precipitate the phosphorus compounds.

12. Process according to any one of the preceding claims, **characterized in that** the aluminium salt is selected from the group consisting of aluminium chloride, aluminium sulphate and potassium aluminium sulphate.

13. Process according to any one of the preceding claims, **characterized in that** the sewage sludge ash contains iron.

## Revendications

1. Procédé de récupération de composés de phosphore à partir de cendres de boues d'épuration, de produits contenant du phosphore ou de déchets contenant du phosphore, selon lequel
a) les composés contenant du phosphore contenus dans les cendres de boues d'épuration, les produits contenant du phosphore ou les déchets contenant du phosphore sont mis en solution dans un contenant de digestion par une digestion acide avec un acide minéral dilué et un gâteau de filtration est séparé du filtrat par filtration, le filtrat présentant un pH de 0 à 1,0,
b) un métal sacrificiel choisi dans le groupe constitué par l'aluminium, le fer et le zinc ou leurs mélanges étant ajouté
i. pendant ou immédiatement après la digestion acide dans le contenant de digestion aux cendres de boues d'épuration, aux produits contenant du phosphore ou aux déchets contenant du phosphore et à l'acide minéral dilué, ou
ii. dans un contenant séparé au filtrat après la séparation du gâteau de filtration,
afin de réduire les cations de métaux lourds, le métal lourd métallique ainsi formé étant séparé par filtration conjointement avec le gâteau de filtration ou séparément,
c) un sel d'aluminium, un mélange de différents sels d'aluminium ou une solutions aqueuses des sels d'Al est ajouté en un excès stoechiométrique par rapport à la concentration de phosphore,
d) le pH est augmenté avec une base dans une plage allant de pH 2,1 à 3,0 pour la précipitation des composés de phosphore, et ceux-ci sont séparés.

2. Procédé selon la revendication 1, **caractérisé en ce que** des cendres de boues d'épuration sont de nouveaux ajoutées avant l'ajout du sel d'aluminium à l'étape c), le pH étant de nouveau augmenté à un pH de 1,0 à 2,0 par les cendres de boues d'épuration et un gâteau de filtration pré-extrait étant séparé du filtrat par filtration.

3. Procédé selon l'une quelconque des revendications précédentes, **caractérisé en ce que** le métal sacrificiel est introduit dans le contenant de digestion pendant ou immédiatement après la digestion acide.

4. Procédé selon l'une quelconque des revendications 1 et 2, **caractérisé en ce que** le métal sacrificiel est introduit dans un contenant séparé.

5. Procédé selon l'une quelconque des revendications précédentes, **caractérisé en ce qu'**un réducteur est également introduit à l'étape b) ou c).

6. Procédé selon l'une quelconque des revendications précédentes, **caractérisé en ce que** le métal sacrificiel est l'aluminium.

7. Procédé selon l'une quelconque des revendications précédentes, **caractérisé en ce que** le métal sacrificiel est le fer.

8. Procédé selon l'une quelconque des revendications précédentes, **caractérisé en ce que** l'acide minéral dilué est choisi dans le groupe constitué par l'acide chlorhydrique, l'acide sulfurique, l'acide phosphorique ou leurs mélanges.

9. Procédé selon l'une quelconque des revendications précédentes, **caractérisé en ce que** la base à l'étape d) est choisie dans le groupe constitué par la soude caustique, l'ammoniac, le lait de chaux et la soude.

10. Procédé selon l'une quelconque des revendications 2 à 8 précédentes, **caractérisé en ce que** lors du nouvel ajout de cendres de boues d'épuration, le pH est augmenté dans une plage allant de pH 1,3 à 1,8.

11. Procédé selon l'une quelconque des revendications précédentes, **caractérisé en ce que** la plage de pH à l'étape d) est augmentée dans la plage allant de pH 2,5 à 3,0 pour la précipitation des composés de phosphore.

12. Procédé selon l'une quelconque des revendications précédentes, **caractérisé en ce que** le sel d'aluminium est choisi dans le groupe constitué par le chlorure d'aluminium, le sulfate d'aluminium et le sulfate de potassium et d'aluminium.

13. Procédé selon l'une quelconque des revendications précédentes, **caractérisé en ce que** les cendres de boues d'épuration contiennent du fer.
